# EUROPEAN PATENT APPLICATION

(11) **EP 4 552 949 A1**
(43) Date of publication of application: **14.05.2025**
(21) Application number: 24198314.7
(22) Date of filing: 04.09.2024
(51) Int. Cl.: B62D 11/00, E01H 5/09, B62D 11/04

(54) **HAND-PROPELLED MACHINE**

(30) Priority: 10.11.2023 CN 202311503265; 10.11.2023 CN 202323046669 U; 10.11.2023 CN 202323046753 U
(71) Applicant: Nanjing Chervon Industry Co., Ltd., Nanjing, Jiangsu 211106 (CN)
(72) Inventor: FENG, Jifeng, Nanjing, Jiangsu 211106, (CN); ZHENG, Juntao, Nanjing, Jiangsu 211106, (CN); WANG, Peng, Nanjing, Jiangsu 211106, (CN)
(74) Representative: Sun, Yiming

(57) **Abstract**

A hand-propelled machine includes a frame, a traveling assembly, an operating assembly, and a controller. The controller is configured to control the rotational speed of a first electric motor and the rotational speed of a second electric motor based on the state of a first operating member and the state of a second operating member. The controller is further configured to, when the first operating member is operated to a preset position and the second operating member is not operated, control the first electric motor to reverse at a preset rotational speed.

## Description

### TECHNICAL FIELD

The present application relates to a garden tool and, in particular, to a hand-propelled machine and a control method therefor.

### BACKGROUND

As a push power tool, a snow thrower can be used as an important device for snow removal in winter and has major advantages such as high efficiency, low cost, and environmental protection. When the snow thrower is operating, operations such as speed regulation and turning need to be performed. The snow thrower in the related art is driven by a standing operator. Among the snow thrower in the related art, the turning radius of the snow thrower is relatively large, and it is difficult to achieve a zero-radius turn.

This part provides background information related to the present application, and the background information is not necessarily the existing art.

### SUMMARY

An object of the present application is to solve or at least alleviate part or all of the preceding problems. Therefore, the object of the present application is to provide a hand-propelled machine capable of achieving zero-radius turning and a control method therefor.

To achieve the preceding object, the present application adopts the technical solution below. A hand-propelled machine includes a frame; a traveling assembly connected to the frame and used for supporting the hand-propelled machine to move on the ground, where the traveling assembly includes a first traveling wheel, a first electric motor for driving the first traveling wheel, a second traveling wheel, and a second electric motor for driving the second traveling wheel; an operating assembly including a first operating member and a second operating member for an operator to operate, where the first operating member is used for adjusting the rotational speed of the first electric motor, and the second operating member is used for adjusting the rotational speed of the second electric motor; and a controller configured to control the rotational speed of the first electric motor and the rotational speed of the second electric motor based on a state of the first operating member and a state of the second operating member. The controller is further configured to, when the first operating member is operated to a preset position and the second operating member is not operated, control the first electric motor to reverse at a preset rotational speed.

In some examples, the preset position is the maximum position to which the operating member is operated.

In some examples, the controller is configured to, when the first operating member is operated to the preset position and the second operating member is not operated, keep the rotational speed of the second electric motor unchanged.

In some examples, the controller is configured such that when the first operating member is operated to the preset position and the second operating member is not operated, the second electric motor rotates at the preset rotational speed.

In some examples, the controller is further configured to, when the first operating member is operated between the minimum position and the maximum position, control the first electric motor to decelerate, where the greater the operating amplitude of the first operating member is, the more the first electric motor decelerates.

In some examples, the controller is further configured to, when both the first operating member and the second operating member are operated, control both the first electric motor and the second electric motor to decelerate, where a respective one of the first electric motor and the second electric motor corresponding to one of the first operating member and the second operating member that has a larger operating amplitude decelerates more.

In some examples, the controller is further configured to, when both the first operating member and the second operating member are not operated, control the first electric motor and the second electric motor to each maintain a current rotational speed.

In some examples, the controller is further configured to, when the first operating member and the second operating member are each operated to the preset position, control each of the first electric motor and the second electric motor to decelerate to zero and then reversely accelerate to a preset speed.

In some examples, the operating amplitude of the first operating member is detected by a first position detection device, and the operating amplitude of the second operating member is detected by a second position detection device.

In some examples, the first position detection device includes at least one of a Hall sensor, a pressure sensor, and a potentiometer.

In some examples, the hand-propelled machine is a push snow thrower or a push mower.

In some examples, the first operating member and the second operating member each include a handle.

In some examples, the first operating member and the second operating member are operated in a pressing manner or a rotating manner.

In some examples, the first electric motor and the second electric motor are wheel hub motors.

In some examples, a push mower further includes at least one battery pack, and the at least one battery pack is capable of supplying power to the first electric motor and the second electric motor and is detachably mounted on the push mower.

A control method for a hand-propelled machine is provided. When the hand-propelled machine moves, if it is detected that the first operating member is operated, a position to which the first operating member is operated is detected in real time, and if it is detected that the position to which the first operating member is operated reaches the preset position, the first electric motor is controlled to decelerate to zero and then reversely accelerate to the preset rotational speed.

In some examples, the preset position is the maximum position to which the operating member is operated.

In some examples, the controller is configured such that when the first operating member is operated to the preset position and the second operating member is not operated, the second electric motor keeps the rotational speed unchanged or rotates at the preset rotational speed.

A hand-propelled machine includes a frame; a traveling assembly connected to the frame and used for supporting the hand-propelled machine to move on the ground, where the traveling assembly includes a first traveling wheel, a first electric motor for driving the first traveling wheel, a second traveling wheel, and a second electric motor for driving the second traveling wheel; an operating assembly mounted on the frame and operated by an operator, where the operating assembly includes a first operating member for adjusting the rotational speed of the first electric motor and a second operating member for adjusting the rotational speed of the second electric motor; and a controller configured to control the rotational speed of the first electric motor and the rotational speed of the second electric motor based on a state of the first operating member and a state of the second operating member. The controller is further configured to, when both the first operating member and the second operating member are operated, control both the first electric motor and the second electric motor to decelerate, where a respective one of the first electric motor and the second electric motor corresponding to one of the first operating member and the second operating member that has a larger operating amplitude decelerates more.

In some examples, the operating amplitude of the first operating member is detected by a first position detection device, and the operating amplitude of the second operating member is detected by a second position detection device, where the first position detection device includes at least one of a Hall sensor, a pressure sensor, and a potentiometer.

### BRIEF DESCRIPTION OF THE DRAWINGS

FIG. 1 is a structural view of a snow thrower according to an example of the present application from a first angle.
FIG. 2 is a structural view of a snow thrower according to an example of the present application from a second angle.
FIG. 3 is a structural view of a traveling assembly involved in some examples of the present application.
FIG. 4 is a structural view of a traveling assembly involved in some examples of the present application.
FIG. 5 is a structural view of a traveling assembly involved in some examples of the present application.
FIG. 6 is a structural view of a traveling assembly involved in other examples of the present application.
FIG. 7 is a structural view of a traveling assembly involved in other examples of the present application.
FIG. 8 is a structural view of a traveling assembly involved in other examples of the present application.
FIG. 9 is a structural view of a traveling assembly involved in other examples of the present application.
FIG. 10 is a module block of the snow thrower in FIG. 1.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear"" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

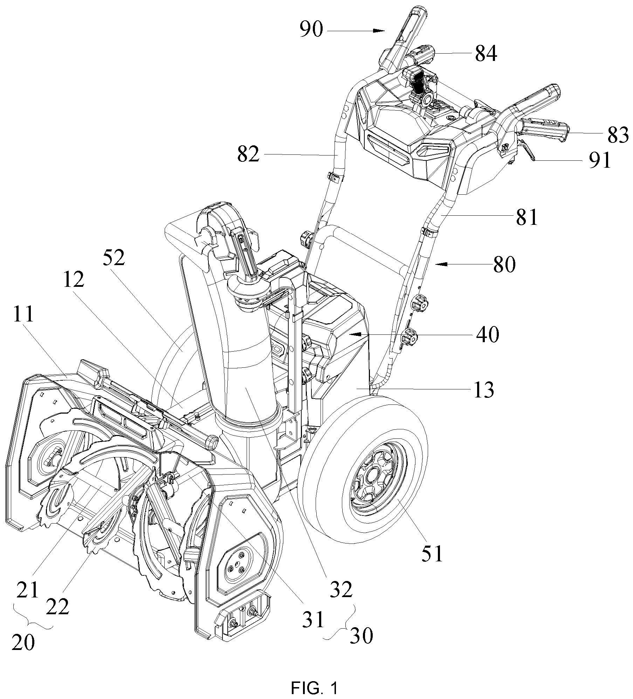

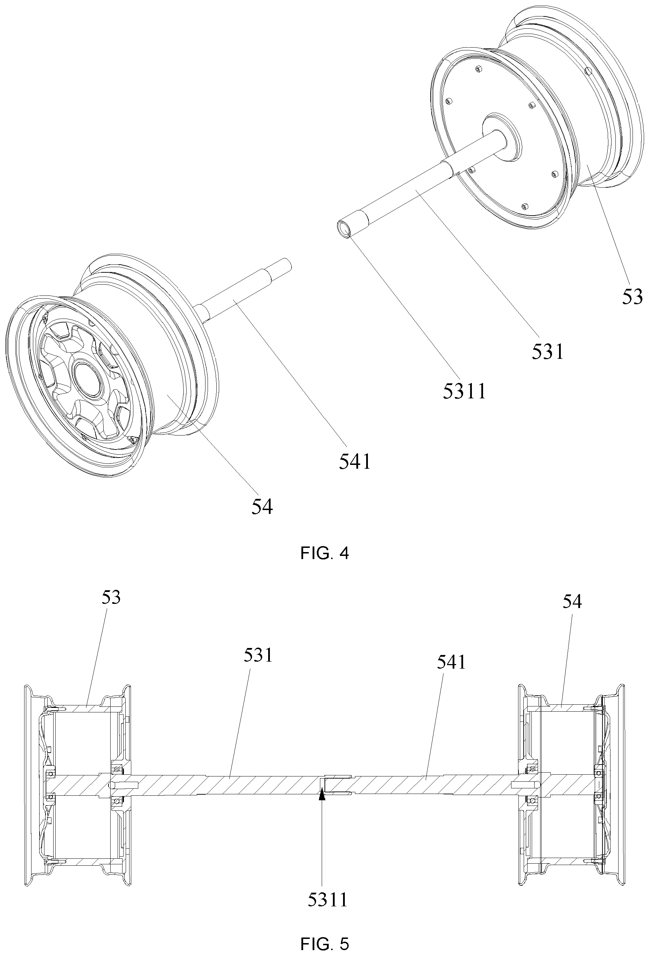

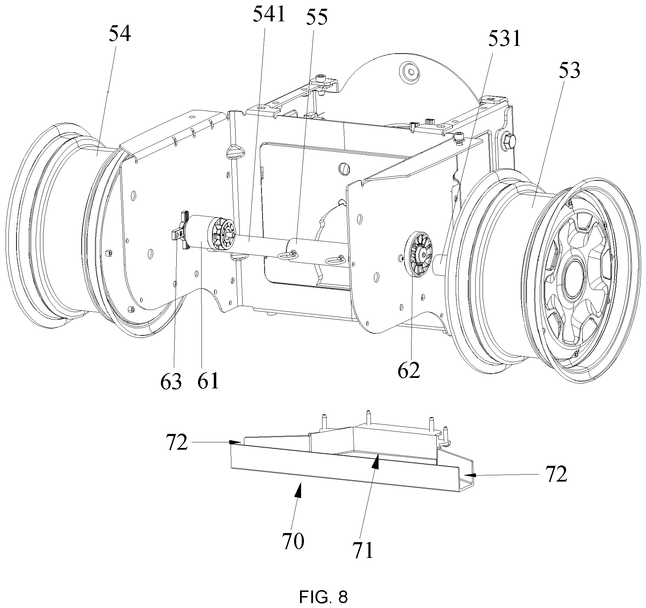

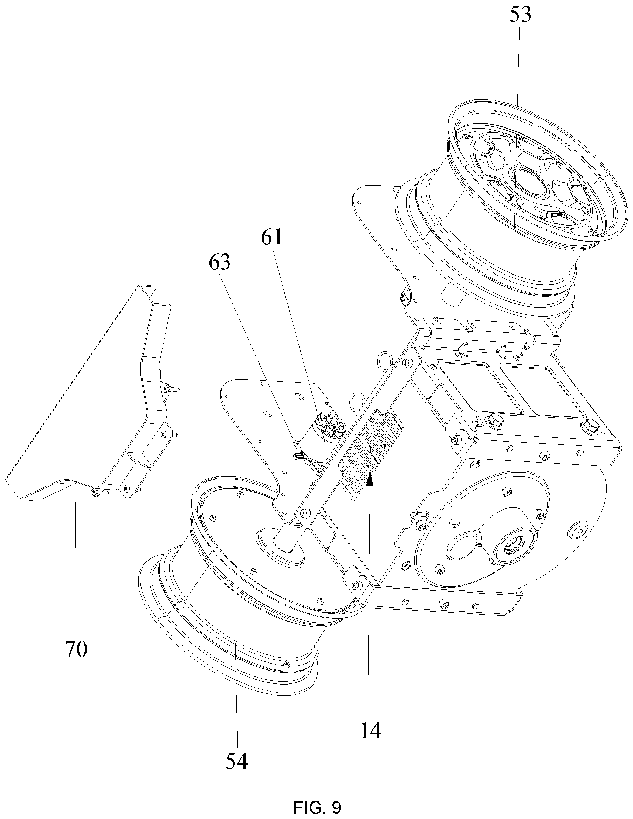

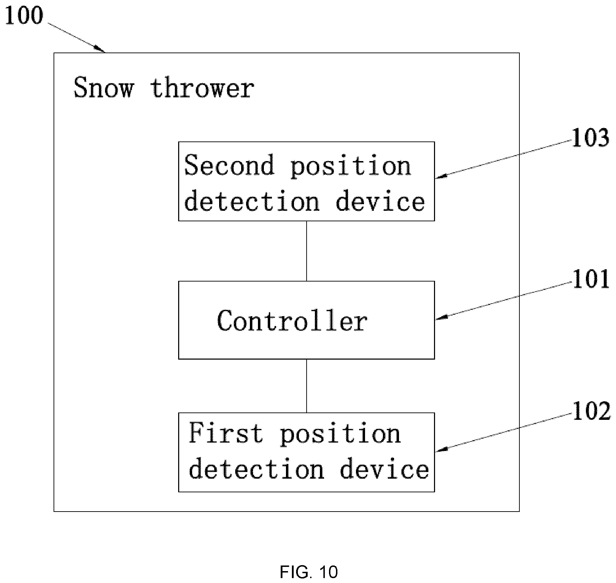

The present application provides a hand-propelled machine. In this example, the hand-propelled machine is a snow thrower 100. Of course, in other examples, the hand-propelled machine may be a mower or the like. As shown in FIGS. 1 to 10, the snow thrower 100 mainly includes a frame 10, a snow removal assembly 20, a snow throwing assembly 30, an energy device, a traveling assembly 50, first heat dissipation devices 60, a handle assembly 80, an operating assembly 90, and a controller 101.

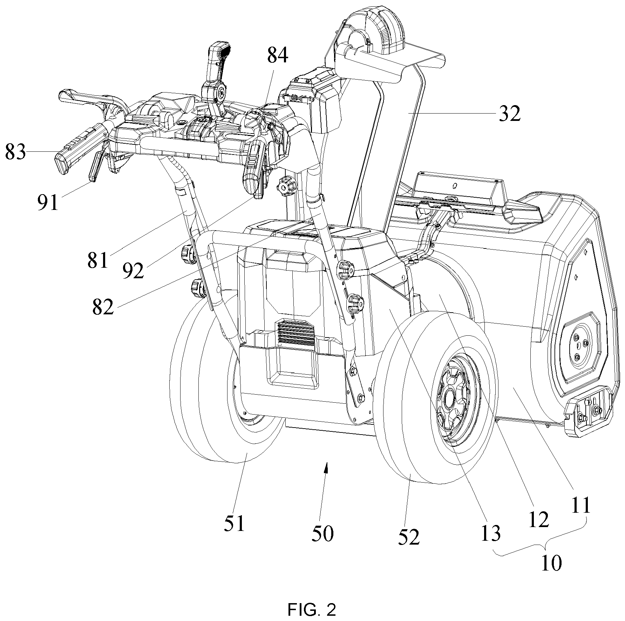

Referring to FIGS. 1 and 2, the snow removal assembly 20 includes a first rotary shaft 21 and an auger 22 disposed on the first rotary shaft 21. As a functional element, the auger 22 can be driven to rotate about a first axis to implement the snow removal function. The snow throwing assembly 30 includes a second rotary shaft 31 and a snow thrower paddle disposed on the second rotary shaft 31. As a functional element, the snow thrower paddle can be driven to rotate about a second axis to implement the snow throwing function. The second axis is perpendicular to the first axis. A motor can drive the auger 22 to rotate about the first axis and at the same time, drive the snow thrower paddle to rotate about the second axis. The specific structure of the motor simultaneously driving the first rotary shaft 21 and the second rotary shaft 31 adopts the existing art and is not described in detail here. The motor may be an internal combustion engine powered by fuel combustion or may be an electric motor powered by electrical energy. In this example, the motor is the electric motor. The energy device is electrically connected to the electric motor to provide power for the electric motor to rotate. The energy device is a battery pack assembly 40, and the battery pack assembly 40 includes at least one battery pack. In some examples, the at least one battery pack is detachably mounted to the hand-propelled machine.

The frame 10 includes a snow intake housing 11 and a snow throwing housing 12. The snow intake housing 11 is located on the front side. The snow intake housing 11 forms a first space for accommodating the auger 22. At least part of the auger 22 is located in the first space. The snow throwing housing 12 is connected to the rear side of the snow intake housing 11. The snow throwing housing 12 forms a second space for accommodating the snow thrower paddle. The snow thrower paddle is located in the second space. The second space connects with the first space. The snow throwing assembly 30 further includes a snow throwing cylinder 32 connected to the outer side of the snow throwing housing 12 and connecting with the second space. The snow throwing cylinder 32 is used for throwing snow. When the snow thrower is removing snow, under the action of the auger 22, the snow enters the snow intake housing 11 from a snow inlet, the auger 22 can transfer at least part of the scraped snow to the snow thrower paddle, the snow thrower paddle throws the snow to the snow throwing cylinder 32, and finally, the snow is discharged from a snow outlet of the snow throwing cylinder 32. The snow throwing assembly 30 is used for changing the movement trajectory of snow to direct the snow to a distant place, or in other words, for guiding the snow throwing direction of the snow thrower.

The frame 10 further includes a battery pack housing 13 connected to the rear side of the snow throwing housing 12, and the battery pack assembly 40 is disposed in the battery pack housing 13.

The traveling assembly 50 is connected to the frame 10 and is used for supporting the snow thrower to move on the ground. The traveling assembly 50 includes traveling wheels and traveling electric motors for driving the traveling wheels. The traveling wheels include a first traveling wheel 51 and a second traveling wheel 52 that are located on two sides of the frame 10, respectively. The first traveling wheel 51 and the second traveling wheel 52 can both rotate relative to the frame 10 so that the snow thrower can move on the ground. The traveling electric motors include a first electric motor 53 and a second electric motor 54. The first electric motor 53 is used for driving the first traveling wheel 51, and the second electric motor 54 is used for driving the second traveling wheel 52. The first electric motor 53 and the second electric motor 54 are wheel hub motors. In some examples, the first electric motor 53 and the second electric motor 54 are wheel motors.

The first electric motor 53 includes a first output shaft 531 mounted on the frame 10, and the second electric motor 54 includes a second output shaft 541 mounted on the frame 10. The first output shaft 531 is coaxial with the second output shaft 541. Two sidewalls of the frame 10 are each provided with a fixing groove, the first output shaft 531 is fixed in one fixing groove corresponding to the first output shaft 531, and the second output shaft 541 is fixed in one fixing groove corresponding to the second output shaft 541. In some examples, the fixing groove has an open notch. When the output shaft is assembled with the frame 10, the output shaft may be inserted into the fixing groove from the notch of the fixing groove, or the output shaft may be inserted into the fixing groove from the center hole of the fixing groove. In some examples, the fixing groove is a closed groove. When the output shaft is assembled with the frame 10, the output shaft can only be inserted into the fixing groove through the center hole of the fixing groove. In addition, the output shaft may be fixed to the fixing groove through a fixing member, or a flat portion may be machined on the output shaft to limit the rotation of the output shaft, or the rotation of the output shaft may be limited by a spline structure.

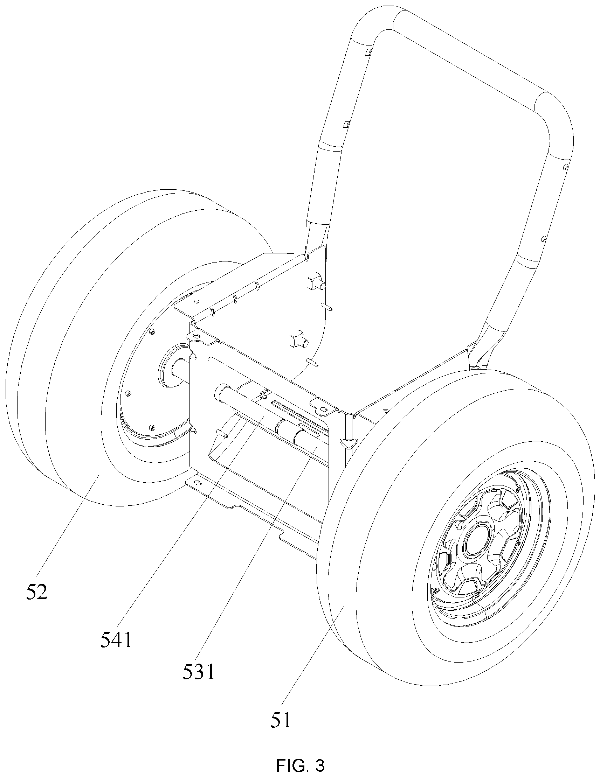

Referring to FIGS. 3 to 5, in some examples, the projections of the first output shaft 531 and the second output shaft 541 on the ground have an overlapping region. Specifically, a hollow coupling portion 5311 is disposed on one of the first output shaft 531 and the second output shaft 541, and an end of the other one of the first output shaft 531 and the second output shaft 541 is inserted into the hollow coupling portion 5311. In some examples, the first output shaft 531 and the second output shaft 541 are threadedly connected. Internal threads are provided on the inner wall of the hollow coupling portion 5311, external threads are provided on the end of the output shaft on which the hollow coupling portion 5311 is not disposed, and the first output shaft 531 and the second output shaft 541 are threadedly connected through the internal threads and the external threads. In some examples, the first output shaft 531 has an interference fit with the second output shaft 541. For example, the hollow coupling portion 5311 is disposed on the first output shaft 531, and the end of the second output shaft 541 is interference-inserted into the hollow coupling portion 5311.

In some examples, the first output shaft 531 and the second output shaft 541 are integrally formed.

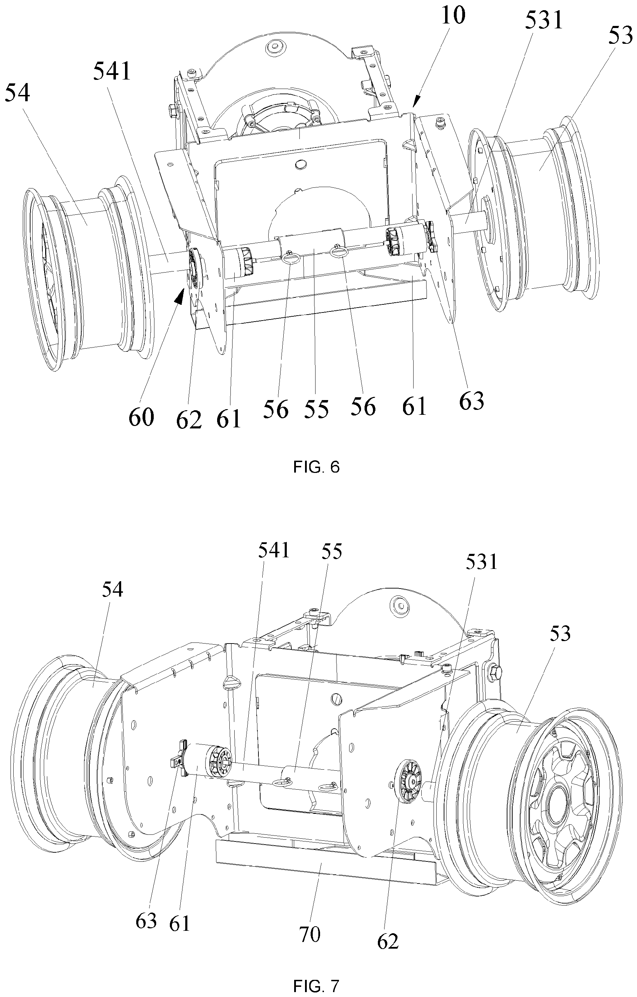

Referring to FIGS. 6 to 9, in some examples, the first output shaft 531 and the second output shaft 541 are connected via a connector 55. For example, the first output shaft 531 and the second output shaft 541 are both inserted into the connector 55. Alternatively, the first output shaft 531 and the second output shaft 541 are both sleeved outside the connector 55. Alternatively, one of the first output shaft 531 and the second output shaft 541 is inserted into the connector 55, and the other one of the first output shaft 531 and the second output shaft 541 is sleeved outside the connector 55. An interference connection may be used between the first output shaft 531 and/or the second output shaft 541 and the connector 55. Alternatively, the first output shaft 531 and/or the second output shaft 541 are fixed to the connector 55 via fixing members 56. Specifically, opened first fixing holes are provided on the first output shaft 531 and/or the second output shaft 541, and an axis of the first fixing hole is perpendicular to an axis of the first output shaft 531 and/or an axis of the second output shaft 541; opened second fixing holes are provided on the connector 55, and an axis of the second fixing hole is perpendicular to the axis of the first output shaft 531 and/or the axis of the second output shaft 541; the fixing member 56 is simultaneously inserted into the first fixing hole and the second fixing hole, and the exposed two ends of the fixing member 56 are limited and fixed by limiting structures.

With continued reference to FIGS. 6 to 9, the first heat dissipation devices 60 are connected to the frame 10, and the first heat dissipation device 60 includes a heat dissipation electric motor 61 and a fan 62 driven by the heat dissipation electric motor 61; at least part of the heat dissipation electric motor 61 is located in the accommodation space of the frame 10, and the cooling airflow generated when the fan 62 rotates flows through the traveling electric motor. Two first heat dissipation devices 60 are provided, and the two first heat dissipation devices 60 are in one-to-one correspondence with the first electric motor 53 and the second electric motor 54.

In some examples, the fan 62 is located on the outer side of the frame 10 and faces the traveling electric motor, that is, the wind from the fan 62 directly blows the traveling electric motor. In some examples, the fan 62 is located on the inner side of the frame 10 (this case is not shown in the figure), and the cooling airflow generated when the fan 62 rotates is transmitted to the traveling electric motor through an air guide hood 70. The air guide hood 70 is connected to the frame 10 and is formed with an air guide channel 71 and two air guide ports 72 both connecting with the air guide channel 71, where one of the two air guide ports 72 faces the first electric motor 53, and the other one of the two air guide ports 72 faces the second electric motor 54. The airflow generated by the fans 62 flows through the air guide channel 71 and then is guided to the first electric motor 53 and the second electric motor 54 through the two air guide ports 72. The fans 62 may be blowing fans 62 or suction fans 62. The positions of the fans 62 in the frame 10 are not limited, as long as the airflow generated by the fans 62 can flow through the air guide channel 71.

In addition to the first heat dissipation devices 60, the snow thrower further has a second heat dissipation device, that is, a main heat dissipation device for dissipating heat for the motor, the battery pack assembly 40, and the controller 101 of the snow thrower. The frame 10 has a heat dissipation air duct, and the air guide hood 70 is disposed at an air outlet 14 of the heat dissipation air duct. The cooling airflow generated by the second heat dissipation device can not only dissipate heat for the motor, the battery pack assembly 40, and the controller 101 but also flow to the air guide hood 70 through the heat dissipation air duct and then be transmitted to the traveling electric motors through the air guide hood 70.

The first heat dissipation device 60 further includes a heat sink 63 for dissipating heat for the output shaft of the traveling electric motor. In some examples, the heat sink 63 is directly fixed to the output shaft of the traveling electric motor (this case is not shown in the figure). In some examples, the heat sink 63 is fixedly disposed on the frame 10 and may be disposed on the inner side of the frame 10 or the outer side of the frame 10. To improve the compactness of the structure, the heat sink 63 may be sleeved on the output shaft of the heat dissipation electric motor 61. The heat sink 63 is in a windmill shape and includes multiple branch pieces distributed at intervals around a circumference, and each branch piece is connected to the frame 10.

Referring to FIGS. 1 and 2, the handle assembly 80 is connected to the frame 10 and includes oppositely disposed connecting rods. The oppositely disposed connecting rods are defined here as a first connecting rod 81 and a second connecting rod 82, an end of the first connecting rod 81 and an end of the second connecting rod 82 are connected to the frame 10, the other end of the first connecting rod 81 forms a first handle 83, the other end of the second connecting rod 82 forms a second handle 84, and the first handle 83 and the second handle 84 are used for the user to hold, that is, the user can control the snow thrower by holding the first handle 83 and the second handle 84.

The operating assembly 90 includes a first operating member 91 and a second operating member 92. The first operating member 91 is disposed on the first handle 83, and the second operating member 92 is disposed on the second handle 84. The first operating member 91 is used for adjusting the rotational speed of the first electric motor 53, and the second operating member 92 is used for adjusting the rotational speed of the second electric motor 54. In some examples, the first operating member 91 and the second operating member 92 are operated in a pressing manner. In some examples, the first operating member 91 and the second operating member 92 are operated in a rotating manner.

The controller 101 is configured to control the rotational speed of the first electric motor 53 and the rotational speed of the second electric motor 54 based on the state of the first operating member 91 and the state of the second operating member 92, where the rotational speed includes the magnitude and direction of the speed. Specifically, when both the first operating member 91 and the second operating member 92 are not operated, that is, when the first operating member 91 and the second operating member 92 are each located at the minimum position, the first electric motor 53 and the second electric motor 54 are controlled to each maintain the current rotational speed, and the snow thrower keeps moving forward at the current speed. When the first operating member 91 and the second operating member 92 are each located at the minimum position, it means that both the first operating member 91 and the second operating member 92 are not operated. Referring to FIG. 2, the first operating member 91 and the second operating member are each located at the minimum position. Specifically, when the first operating member 91 is located at the minimum position, the first operating member 91 is farthest from the first handle 83; and when the second operating member 92 is located at the minimum position, the second operating member 92 is farthest from the second handle 84.

When both the first operating member 91 and the second operating member 92 are operated and the operating positions are each located between the minimum position and the maximum position, both the first electric motor 53 and the second electric motor 54 are controlled to decelerate, and a respective one of the first electric motor 53 and the second electric motor 54 corresponding to one of the first operating member 91 and the second operating member 92 that has a larger operating amplitude decelerates more. That is, if the operating amplitude of the first operating member 91 is greater than the operating amplitude of the second operating member 92, the first electric motor 53 decelerates more than the second electric motor 54, the snow thrower turns toward the first operating member 91, and the turning radius is not zero. If the operating amplitude of the second operating member 92 is greater than the operating amplitude of the first operating member 91, the second electric motor 54 decelerates more than the first electric motor 53, the snow thrower turns toward the second operating member 92, and the turning radius is not zero. When the first operating member 91 is operated to be closest to the first handle 83, the operating position of the first operating member 91 is considered to be the maximum position. When the second operating member 92 is operated to be closest to the second handle 84, the operating position of the second operating member 92 is considered to be the maximum position. In other words, the first operating member 91 and the second operating member 92 each reach the maximum position after going through the maximum operating stroke from the minimum position.

When the first operating member 91 is operated and the operating position is between the minimum position and the maximum position, the first electric motor 53 is controlled to decelerate, and the greater the operating amplitude of the first operating member 91 is, the more the first electric motor 53 decelerates; and the second electric motor 54 maintains the current rotational speed. At this time, the snow thrower turns toward the first operating member 91, and the turning radius is not zero. When the second operating member 92 is operated and the operating position is between the minimum position and the maximum position, the second electric motor 54 is controlled to decelerate, and the greater the operating amplitude of the second operating member 92 is, the more the second electric motor 54 decelerates; and the first electric motor 53 maintains the current rotational speed. At this time, the snow thrower turns toward the second operating member 92, and the turning radius is not zero.

When the first operating member 91 is operated to a preset position and the second operating member 92 is not operated, the first electric motor 53 is controlled to decelerate to zero and then reversely accelerate to a preset rotational speed, and the second electric motor 54 rotates forward at the preset rotational speed or keeps the rotational speed unchanged. At this time, the snow thrower turns toward the first operating member 91, and the turning radius is zero, that is, the snow thrower turns in place. When the second operating member 92 is operated to the preset position and the first operating member 91 is not operated, the second electric motor 54 is controlled to decelerate to zero and then reversely accelerate to the preset rotational speed, and the first electric motor 53 rotates forward at the preset rotational speed. At this time, the snow thrower turns toward the second operating member 92, and the turning radius is zero, that is, the snow thrower turns in place. In this example, the preset position is the maximum position.

When the first operating member 91 and the second operating member 92 are each operated to the preset position, each of the first electric motor 53 and the second electric motor 54 is controlled to decelerate to zero and then reversely accelerate to a preset speed, and the snow thrower moves backward at the preset speed. Similarly, the preset position is the maximum position.

The operating amplitude of the first operating member 91 is detected by a first position detection device 102, and the operating amplitude of the second operating member 92 is detected by a second position detection device 103. The first position detection device 102 and the second position detection device 103 are both sensors, including, but not limited to, Hall sensors, pressure sensors, potentiometers, switches, angle sensors, encoders, tension and pressure sensors, and electroencephalography (EEG) sensors.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A hand-propelled machine (100), comprising:
a frame (10);
a traveling assembly (50) connected to the frame and used for supporting the hand-propelled machine to move on the ground, wherein the traveling assembly comprises a first traveling wheel (51), a first electric motor (53) for driving the first traveling wheel, a second traveling wheel (52), and a second electric motor (54) for driving the second traveling wheel;
an operating assembly (90) comprising a first operating member (91) and a second operating member (92) for an operator to operate, wherein the first operating member is used for adjusting a rotational speed of the first electric motor, and the second operating member is used for adjusting a rotational speed of the second electric motor; and
a controller (90) configured to control the rotational speed of the first electric motor and the rotational speed of the second electric motor based on a state of the first operating member and a state of the second operating member;
wherein the controller is further configured to, when the first operating member is operated to a preset position and the second operating member is not operated, control the first electric motor to reverse at a preset rotational speed.

2. The hand-propelled machine of claim 1, wherein the preset position is a maximum position to which the first operating member is operated.

3. The hand-propelled machine of claim 1, wherein the controller is configured to, when the first operating member is operated to the preset position and the second operating member is not operated, keep the rotational speed of the second electric motor unchanged.

4. The hand-propelled machine of claim 1, wherein the controller is configured such that when the first operating member is operated to the preset position and the second operating member is not operated, the second electric motor rotates at the preset rotational speed.

5. The hand-propelled machine of claim 1, wherein the controller is further configured to, when the first operating member is operated between a minimum position and a maximum position, control the first electric motor to decelerate, wherein the greater an operating amplitude of the first operating member is, the more the first electric motor decelerates.

6. The hand-propelled machine of claim 1, wherein the controller is further configured to, when both the first operating member and the second operating member are operated, control both the first electric motor and the second electric motor to decelerate, wherein a respective one of the first electric motor and the second electric motor corresponding to one of the first operating member and the second operating member that has a larger operating amplitude decelerates more.

7. The hand-propelled machine of claim 1, wherein the controller is further configured to, when both the first operating member and the second operating member are not operated, control the first electric motor and the second electric motor to each maintain a current rotational speed.

8. The hand-propelled machine of claim 1, wherein the controller is further configured to, when the first operating member and the second operating member are each operated to the preset position, control each of the first electric motor and the second electric motor to decelerate to zero and then reversely accelerate to a preset speed.

9. The hand-propelled machine of claim 1, wherein an operating amplitude of the first operating member is detected by a first position detection device, and an operating amplitude of the second operating member is detected by a second position detection device.

10. The hand-propelled machine of claim 9, wherein the first position detection device comprises at least one of a Hall sensor, a pressure sensor, and a potentiometer.

11. The hand-propelled machine of claim 1, wherein the hand-propelled machine is a push snow thrower or a push mower.

12. The hand-propelled machine of claim 1, wherein the first operating member and the second operating member each comprise a handle.

13. The hand-propelled machine of claim 1, wherein the first operating member and the second operating member are operated in a pressing manner or a rotating manner.

14. The hand-propelled machine of claim 1, wherein the first electric motor and the second electric motor are wheel hub motors.

15. The hand-propelled machine of claim 1, further comprising at least one battery pack (40), and the at least one battery pack is capable of supplying power to the first electric motor and the second electric motor and is detachably mounted on the push mower.
